# EUROPEAN PATENT SPECIFICATION

(11) **EP 2 609 975 B1**
(45) Date of publication and mention of the grant of the patent: **30.11.2016**
(21) Application number: 11196063.9
(22) Date of filing: 29.12.2011
(51) Int. Cl.: B01D 1/16, B29B 7/84, B01D 1/22, B01D 19/00

(54) **Degassing arrangement and method**
Entgasungsanordnung und Verfahren
Agencement de dégazage et procédé

(43) Date of publication of application: 03.07.2013
(73) Proprietor: Siemens Aktiengesellschaft, 80333 München (DE)
(72) Inventor: Grove-Nielsen, Erik, 7870 Roslev (DK)

(56) References cited:
- WO-A1-2005/054308
- WO-A1-2011/126450
- GB-A- 2 056 869
- US-A- 3 110 646
- US-A- 4 283 250
- US-A- 5 591 252

## Description

### Field of invention

The present invention relates to an arrangement and to a method for degassing a moulding material, in particular for manufacturing a rotor blade of a wind turbine.

### Art Background

Components of technical systems, such as vehicle parts, wind turbine blades etc. may be manufactured using a transfer moulding process. Thereby, a reinforcement material such as glass fiber or carbon fiber is placed in a mould cavity and afterwards a matrix material such as unsaturated polyester or epoxy resin is infused into the cavity.

In particular, vacuum assisted resin transfer moulding (VARTM) may be applied for manufacturing different components, such as a rotor blade for a wind turbine. After curing or cross-linking the resin (by adding and mixing a crosslinker), the cured component represents a very rigid fiber reinforced composite.

Thereby, the infusion process may take place at a very high vacuum, such as 5 mbar to 20 mbar. At this relatively low pressure (corresponding to a high vacuum), any dissolved or trapped gas, such as air, is expanded by a factor of 50 to 200 times. Thus, even if an amount of trapped air of 0.1 vol.-% (measured at atmospheric pressure) is present within the resin material, it may give problems at the low pressure prevailing during the infusion process. In particular, the entrapped air or other gas may cause voids or holes in the final laminate and may result in areas with insufficient contact between fibers (so-called white spots).

Different degassing systems have been used including ultrasonic probes.

EP 2 353 826 A1 describes a method and an arrangement to improve the production of a rotor blade of a wind turbine, wherein degassing of the resin may be achieved by an applied vacuum, wherein it is also possible to apply vibrations to the resin for its degassing.

Document US 5,591,252 discloses a device and method for the continuous degassing of casting resin, wherein several spatially connected areas are provided in the housing, through which areas the casting resin is sequentially guided, wherein a transferring structure is provided for transferring the casting resin into the respective next adjacent area.

Document WO 2005/054308 discloses a method for evaporating monomers and other volatile constituents out from polymer melts in an evaporator device, whereby the horizontally disposed evaporator device has a cylindrical housing inside of which perforated disks are housed that rotate on an externally driven center shaft for continuously renewing the surface of the melt to be evaporated out.

Document US 4,283,250 discloses an apparatus for concentrating a liquid solution comprised in a plurality of spaced-apart plates arranged for rotation about a substantially horizontal axis. On the hollow tubular section of the shaft is arranged a plurality of mutually spaced plates or disks, wherein the shaft with disks is rotated relatively slowly, so that uniform dispersion of the solution over respective disks is promoted, without the solution being thrown from the peripheral surfaces of the disks by centrifugal force.

It has been observed that the conventional systems for degassing a resin are inefficient and costly in manufacturing and use.

There may be a need for an arrangement and for a method for degassing a moulding material, in particular for manufacturing of a rotor blade of a wind turbine, wherein efficient degassing is achievable, wherein in particular the moulding material has, before the degassing, between 0.1 and 1.0 vol.-%, in particular between 0.3 and 0.7 vol.-%, air contained therein.

### Summary of the Invention

This need may be met by the subject matter according to the independent claims. Advantageous embodiments of the present invention are described by the dependent claims.

According to an embodiment of the present invention it is provided an arrangement for degassing a moulding material according to claim 1. The arrangement comprises a container; a stack of a plurality of plates within the container, the plates being rotatable relative to the container and being arranged on top of each other and spaced apart from each other (and rotatable around a rotation along a stacking direction); and a supply system for supplying the moulding material onto surfaces of the plates for degassing. The arrangement comprises further features as specified in claim 1.

The moulding material may in particular be a liquid, viscous material which may have a viscosity of between 10 and 1000 mPa * s (at a temperature of 20°C). In particular, the viscosity of the moulding material may decrease with increasing temperature of the moulding material.

The container may be limited by a container wall, wherein the container wall encloses an inside volume of the container. In particular, the inside volume of the container may have at least partially a cylindrical shape. The container wall may be made of a metal, such as steel. The container may comprise a connector for connecting a pipe for evacuating the container.

The stack of the plurality of plates, in particular disks, is arranged in the inside volume of the container. In particular, the container may be closable such that moulding material filled at least partly into the container may be prevented from leaving the container except via a discharge conduct.

The plates may be rotatable around a common rotation axis, in particular being perpendicular to the surfaces of the plates. Further in particular, the surfaces of the plates may be parallel to each other. Further in particular, the distance between adjacent plates in the stack of the plurality of plates may be constant. In particular, the distance between surfaces of adjacent plates in the stack may be greater than twice a thickness of (a film of) the moulding material adhering to each surface of the plates. In particular, the thickness of the (film of the) moulding material adhering or being supplied onto the surface of the plates may depend on a viscosity of the material which in turn may depend on a temperature of the moulding material supplied to the surfaces of the plates. Thus, the distance between the surfaces of adjacent plates in the stack may be adjusted depending on the used moulding material, the temperature of the moulding material and also a surface characteristics of the surfaces of the plates.

The supply system may comprise one or more supply pipes which are arranged to in particular homogenously distribute the moulding material onto each surface of each plate in a homogenous manner such as to cover an area as largest as possible. Thereby, the degassing process may be improved. In particular, gas, in particular air, trapped into the moulding material having a volume percentage of around 0.1 and 1.0 vol.-%, in particular between 0.3 % to 0.7 %, may be effectively removed from the moulding material during the degassing process such that in the degassed moulding material the trapped gas has an amount of around 0.01 vol% to 0.3 vol%.

Using a stack of plates may increase the available surface area at which the moulding material may adhere or may be supplied to for increasing the capacity of the degassing process for allowing to increase the amount of moulding material which can be degassed in a particular time interval. Thereby, the degassing rate may be increased.

According to an embodiment of the present invention the plates, in particular each of the plates, are planar, thus flat. In particular, the surfaces of each plate are flat. Thereby, the plates may be more easily stacked adjacent to one another, wherein a distance between the surface of adjacent plates may be constant across an extent of the surfaces of the plates. Further, the plates may be manufactured in a simple manner. The plates may be circular which may increase the available surface area given a particular size of the container. The number of plates in the stack may be between 5 and 100, in particular between 10 and 40. Thus, the available surface area onto which the moulding material may be supplied may be 5 to 100 times the surface area of a single plate. Thereby, the capacity of the degassing or the rate of the degassing may be increased.

According to an embodiment of the present invention the plates are synchronously rotatable. In particular, the plates may be rotated with a same rotational speed. Thereby, manufacturing the stack and rotating the plates may be simplified.

According to an embodiment of the present invention the stack of plates (or a volume of the stack including the volumes of all plates and the space between adjacent plates) occupies between 70 % and 99 % of an inside volume of the container.

According to an embodiment of the present invention each plate has an upper surface and a lower surface, onto both of which the moulding material is supplied for degassing. Thereby, the area onto which the moulding material can be applied may be increased.

Adapting the upper surface as well as the lower surface to be covered or to be supplied with the moulding material may effectively increase the available surface area at which the moulding material may be adhered or may wet the plate or each of the plates of the stack of plates. Thereby, the degassing capacity or degassing rate may be increased.

According to an embodiment of the present invention the container comprises an uptake region in which the surface is partially immersed in moulding material for adhering to the surfaces of the plates.

The uptake region may comprise the supply system for supplying the moulding material. The container may comprise an inlet for leading the moulding material into the container. The moulding material may in particular partially fill the container such that in particular a portion of each plate of the stack of plates is immersed in the moulding material. In particular, about half or less than half of each plate of the stack of plates may be immersed in the moulding material, when the moulding material is filled into the container.

The moulding material into which the plates are partially immersed may adhere to the surfaces of the plates and may, upon rotation of the plates, be removed from the reservoir of the moulding material present within the container. Thereby, a thin film of moulding material covering the surface of the plates may (removably, thus temporarily) adhere to the surface of the plates. The thin film of moulding material adhered to the surface of the plate may be exposed to an inside volume of the container which may in particular be evacuated to allow gas or air trapped (with)in the moulding material to escape from the moulding material or to be removed from the moulding material.

According to an embodiment of the present invention the rotation axis of the plates is horizontally arrangeable during degassing. Filling into the container a reservoir of moulding material and arranging the rotation axis of the plate horizontally may allow in a simple manner to supply the moulding material onto the surfaces of the plates upon rotation of the plates.

According to an embodiment of the present invention the container comprises a release region in which degassed moulding material is released from surfaces of the plates upon rotation of the plates.

Due to the rotation of the plates the moulding material adhering to the surfaces of the plates may be moved from the uptake region to the release region. Thereby, a certain time span may ellapse during which degassing occurs. In particular, a rotational speed of the plates may be adjusted to achieve a reasonable or suitable degassing time. In particular, the rotational speed (or the degassing time) may be adjusted or selected based on the viscosity of the moulding material which may in turn depend on the temperature of the moulding material.

According to an embodiment of the present invention the arrangement further comprises a scraper system adapted to scrape over rotating surfaces of the plates, wherein a rotation velocity is such as to avoid escape of the moulding material on the surfaces from the surfaces due to centrifugal force.

The scraper system may remove the degassed moulding material from the surfaces of the plates. In particular, the degassed moulding material may be removed by sweeping of the surfaces. In particular, the scraper system may be fixed relative to the container, while a sweeping action or removing action may be achieved due to the rotation of the plates. Thereby, the rotation velocity is relatively small to avoid a release of the moulding material from the surfaces of the plates due to a centrifugal force.

According to another embodiment of the present invention a rotation velocity is such as to result in escape of the moulding material from the surfaces due to centrifugal force.

Thereby, a scraper system may be dispensed with. However, the degassing time may depend on the rotational speed and a diameter of the plates. The degassed moulding material may be collected radially outwards from the plates.

According to an embodiment of the present invention the supply system comprises a supply tube with outlets at different radial positions; and/or a supply tube with an outlet at a radially inner position of the rotating stack (release at radially outer region), and/or a supply conduct within a rotatable shaft at which the plates are connected; and/or a spray supply system providing exit holes at different radial positions.

Providing a supply tube with outlets at different radial positions may allow a homogenous distribution of the moulding material onto almost the entire surface area of each of the rotating plates. This may in particular be advantageous when a relatively low rotational speed is applied.

Providing a supply tube with an outlet at a radially inner position of the rotating stack may be used when a relatively high rotational speed is applied which may result in a centrifugal force which may drive the moulding material supplied to the radially inner portion of the plate towards a radially outer portion of each plate.

Alternatively or additionally the moulding material may be supplied via a supply conduct arranged within a rotatable shaft at which the plates are connected thereby even simplifying the arrangement.

Further, alternatively or additionally, a spray system comprising one or more supply ducts or supply tubes having plural outlets or nozzles at different radial positions may be used to evenly distribute the moulding material onto the surfaces of the plates.

According to an embodiment of the present invention the arrangement further comprises a heating system for tempering the material on the surfaces of the plates, wherein the heating system is adapted to heat the material on the surfaces of the plates to a temperature between 20°C and 80°C, in particular between 30°C and 60°C.

The heating system may be advantageous to adjust the temperature of the moulding material, in order to alter or change the viscosity of the moulding material. In particular, the viscosity of the moulding material may decrease with increasing temperature. However, if the temperature is too high such as above 60°C or above 70°C or above 80°C, partial evaporation of components of the moulding material may occur resulting in undesired bubbles and resulting in a change of the composition of the original moulding material. Thereby, a subsequent transfer moulding manufacturing process may be impaired.

According to an embodiment of the present invention the moulding material comprises a thermosetting material, in particular a polymer resin, in particular free of a cross-linker. According to alternative embodiments the moulding material comprises a thermoplastic material which may harden or solidify upon lowering its temperature. The thermosetting material may, after degassing, be mixed with a cross-linker and may further be tempered to increase its temperature. Thereby, a cross-linking reaction may be initiated which may result in cross-linking of molecules comprised in the moulding material for finally solidifying the moulding material. Thereby, degassing of a moulding material suitable for manufacturing a rotor blade of a wind turbine may be achieved.

According to an embodiment of the present invention a vacuum between 2 mbar and 100 mbar, in particular 5 mbar and 50 mbar, is achievable (using one or more pumps) within the container during degassing.

Applying a vacuum within the container may improve the degassing process. In particular, after having performed the degassing process the degassed moulding material may be subjected to a normal atmospheric pressure before adding the cross-linker and before performing the actual vacuum assisted resin transfer moulding process, wherein the moulding material mixed with the cross-linker is infused or injected into a mould cavity.

It should be understood that features individually or in any combination disclosed, described or mentioned with respect to an arrangement for degassing a moulding material may also be applied (individually or in any combination) to a method for degassing a moulding material according to an embodiment of the present invention and vice versa.

According to an embodiment of the present invention it is provided a method for degassing moulding material according to claim 11, the method comprising feeding the moulding material into a container; rotating a plurality of plates within the container relative to the container, the plates being arranged on top of each other and spaced apart from each other for forming a stack; and supplying the moulding material onto surfaces of the rotating plates for degassing. The method comprises further features as specified in claim 11.

According to an embodiment of the present invention a manufacturing process for manufacturing a rotor blade of a wind turbine is provided, wherein the manufacturing process comprises degassing a moulding material according to one of the embodiments described above and performing a vacuum assisted resin transfer moulding process using the degassed moulding material.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

The invention is now described with reference to the accompanying drawing illustrating embodiments. The invention is not limited to the illustrated or described embodiments.

### Brief Description of the Drawings

- Fig. 1: schematically illustrates an elevational view of a degassing arrangement according to a comparative example;
- Fig. 2: schematically illustrates an elevational view of a degassing arrangement according to a comparative example;
- Fig. 3: schematically illustrates a side view of a degassing arrangement according to still another embodiment of the present invention;
- Fig. 4: schematically illustrates a side view of a degassing arrangement according to a comparative example;
- Fig. 5: schematically illustrates a side view of a degassing arrangement according to still another embodiment of the present invention;
- Fig. 6: schematically illustrates a side view of a degassing arrangement according to a comparative example; and
- Fig. 7: schematically illustrates another side view (axial view) of the arrangement illustrated in Fig. 6.

### Detailed Description of Embodiments

Elements or components similar in structure and/or function are labelled in the different figures by reference signs differing only in the first digit.

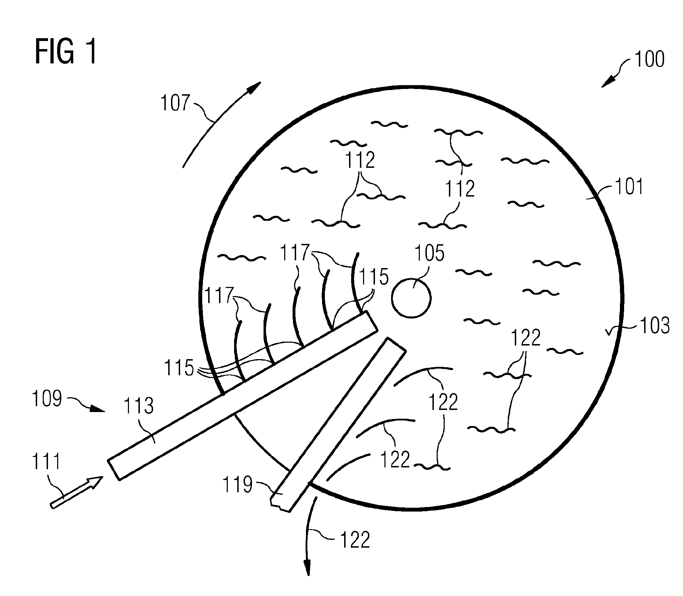

Fig. 1 schematically illustrates an elevational view of an arrangement 100 for degassing a moulding material according to a comparative example including features of a supply system or a system for removing degassed moulding material according to an embodiment of the present invention.

A circular disk 101 is arranged within not illustrated container walls of a container. The disk 101 has a flat surface 103. The disk 101 is one of a plurality of disks forming a stack, wherein the disks are stacked on top of each other having a distance between each other. The disk 101 rotates around a rotation axis 105 during a degassing operation. Thereby, a vacuum between 5 mbar and 50 mbar is applied within the container. The plate 101 rotates in the rotation direction as indicated by the arrow 107.

The degassing arrangement 100 further comprises a supply system 109 for supplying the moulding material 111 onto the surface 103 of the disk 101 to form a film 112 of moulding material. Thereby, a supply tube 113 is arranged relative to the plate 101 to supply the moulding material 111 via a plurality of exit holes 115 which are arranged at different radial positions of the supply tube 113 onto the surface 103 of the plate 101. Thereby, the moulding material 111 is supplied in stripes 117, each stripe originating from one of the exit holes 115.

The moulding material 111 will then evenly distribute onto the surface 103 of the disk 101 as a film 112 and the film 112 of moulding material 111 will be moved around due to the rotation of the disk 101 to be conveyed to a rubber scraper 119 which is arranged at a different circumferential position than the supply tube 113. The rubber scraper 119 sweeps over the surface 103 of the disk 101 such as to remove the moulding material 122 which has been degassed during the time of conveyance from the supply tube 113 to the rubber scraper 119 from the surface 103 of the disk 101 as is indicated by arrows 122. The degassed moulding material 122 removed from the disk 101 is then collected by a not illustrated collection system.

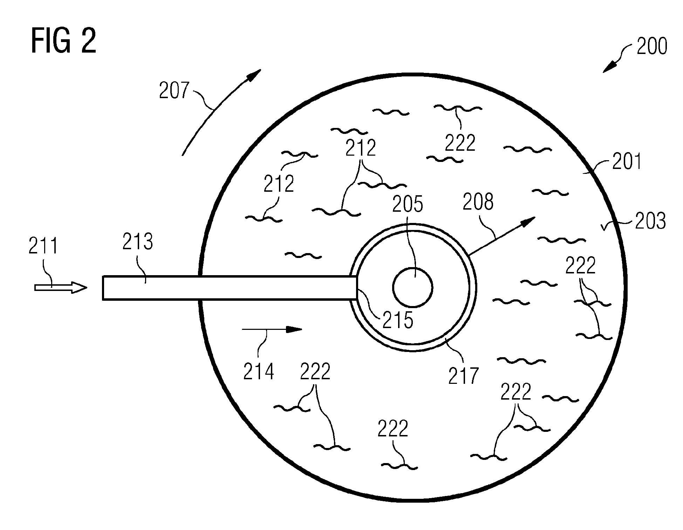

Fig. 2 schematically illustrates a degassing arrangement 200 according to a comparative example including features of a supply system according to another embodiment of the present invention.

The disk 201 rotates around a rotation axis 205 in the rotation direction 207. Different from the embodiment illustrated in Fig. 1 the arrangement 200 illustrated in Fig. 2 comprises a supply tube 213 which has only one exit hole 215 at a radially inner portion of the rotating disk 201. Thereby, the moulding material 211 is supplied to the radially inner portion of the disk 201 as a laid-out stripe 217 forming a circle in a central region of the disk 201.

Due to the rotation of the disk 201 at a relatively high speed a centrifugal force 208 is exerted on the stripe 217 forcing the moulding material 211 radially outwards such as to evenly distribute it across the surface 203 of the disk 201 and to form a thin film 212 on the surface 203. If the disk 201 is placed in a vacuum in the not illustrated container a degassing of the moulding material 211 supplied as a thin film to the surface 203 is performed.

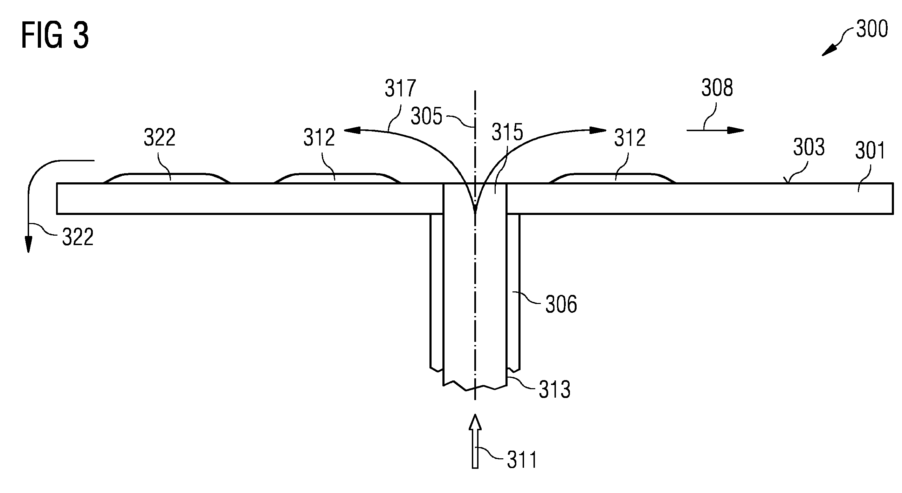

Fig. 3 schematically illustrates a side view of a degassing arrangement 300 according to an embodiment of the present invention.

The disk 301 is rotating around the rotation axis 305 which is vertically oriented in Fig. 3. The disk 301 is connected to a rotation shaft 306 which is hollow inside such as to provide a supply tube 313 for supplying the moulding material 311 at an outlet 315 of the hollow rotation shaft 306, wherein this outlet 315 is arranged in the center of the disk 301. The moulding material 311 exits the supply tube 313 in a direction as indicated by arrows 317 and covers the surface 303 of the disk 301 as a moving film 312 of moulding material. The movement and flattening/distribution of the moulding material is due to the centrifugal force 308.

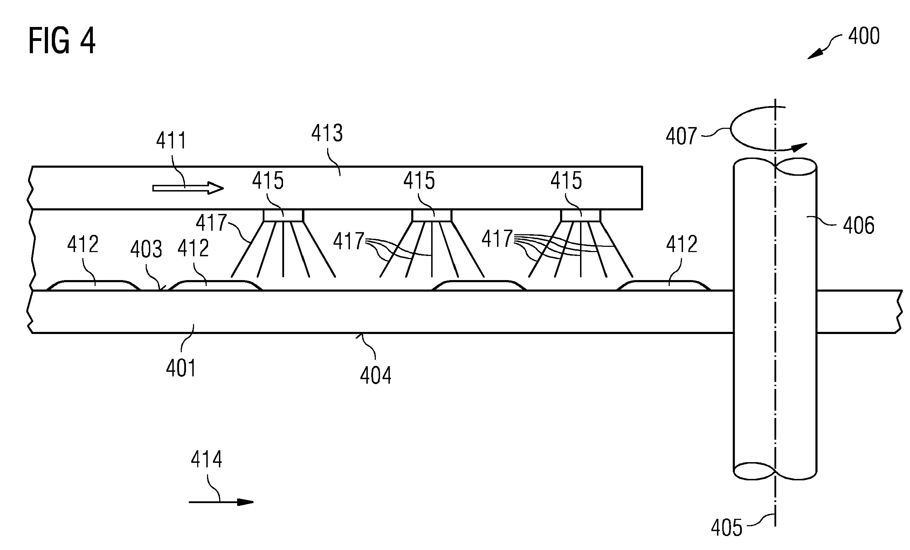

Fig. 4 schematically illustrates a side view of a degassing arrangement 400 according to a comparative example including features of a supply system according to still another embodiment of the present invention.

The disk 401 having a surface 403 rotates around the rotation axis 405 in the direction indicated by arrow 407. A supply tube 413 is arranged axially (along the rotation axis 405) spaced part from the surface 403 of the disk 401. The supply tube 413 comprises exit nozzles 415 at different radial positions (along the radial direction 414). The exit nozzles 415 spray the moulding material 411 conveyed within the supplied tube 413 onto the surface 403 of the disk 401 as indicated by the spray rays 417 such as to distribute the moulding material 411 evenly across the surface 403 as a film 412.

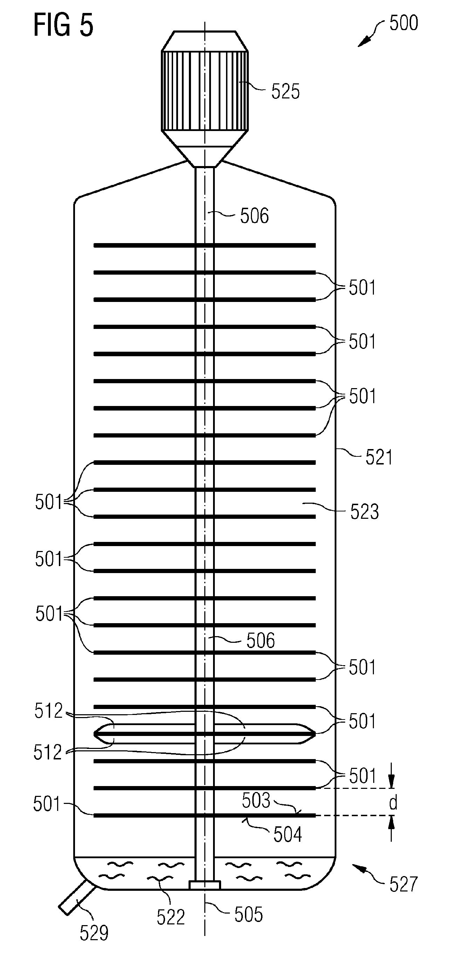

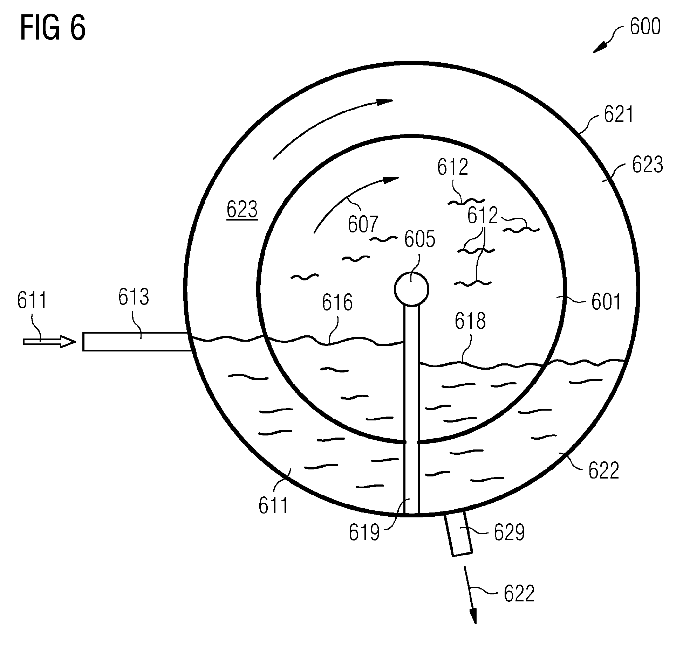

The degassing arrangements 200, 300 and 400 may comprise a similar system for removing the degassed moulding material from the disk as the arrangement 100 illustrated in Fig. 1. The degassing arrangements 100, 200, 300 and 400 illustrated in Figs. 1, 2, 3, 4 may comprise a similar stack of plates and a similar container as the arrangement 500, 600 illustrated in Figs. 5, 6.

Further, the rotating disks illustrated in the embodiments of Fig. 1, 2, 3 and 4 may be heated by a not illustrated heating system such that the moulding material forming a film on the surface of the disks has a temperature between 30°C and 60°C.

Fig. 5 illustrates a side view of a degassing arrangement 500 according to still another embodiment of the present invention. The degassing arrangement 500 comprises a container 521 enclosing an inside volume 523 which may be evacuated to a pressure between 5 mbar to 50 mbar during degassing.

In the inside volume 523 of the container 521 a stack of plates 501 is arranged, wherein the stacks of the plates 501 are stacked on top of each other and being spaced apart from each other by a distance d. The stack of plates, in this case circular disks having planar surfaces 503, is rotatable around the rotation axis 505. For the rotation a motor 525 is provided which is mechanically connected to the rotation shaft 506.

Moulding material 511 is supplied to the plurality of circular disks 501 by a not illustrated supply system which may be similar to one of the supply systems illustrated in the embodiments depicted in Figs. 1 to 4. Also, the degassed moulding material may be removed from the plurality of plates 501 in a similar manner as is illustrated in the embodiment 100 of Fig. 1. The degassed moulding material 522 is collected at the container bottom 527 and may be removed from the container 521 via the outlet tube 529 at the bottom of the container or vessel 521.

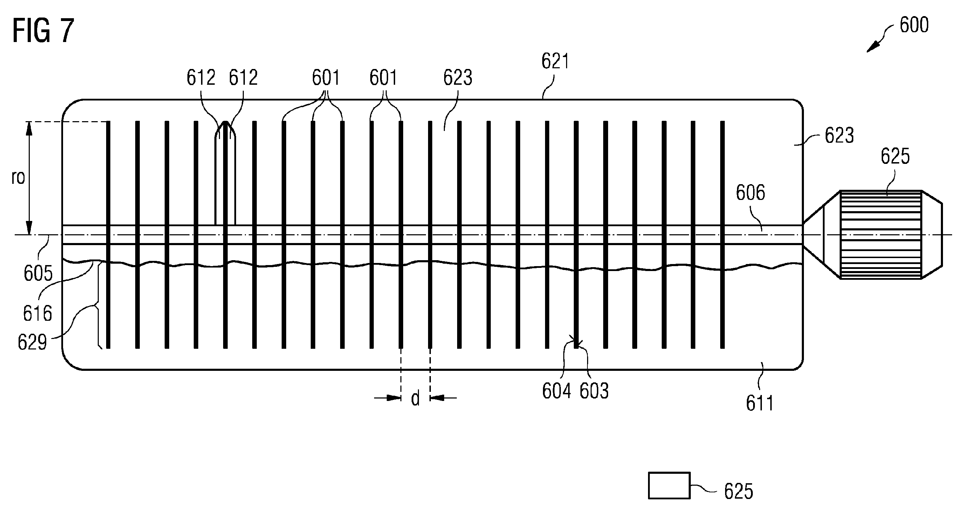

Figs. 6 and 7 illustrate an axial view and a side view, respectively, of a degassing arrangement 600 according to a comparative example.

A stack of plates 601 rotates around a rotation axis 605 which is oriented in a horizontal direction during the degassing operation. The stack of plates 601 is enclosed in a container 621 providing an inside volume 623 which can be evacuated to an appropriate pressure during the degassing operation. For rotating the stack of plates 601 the motor 625 is provided rotating the rotation shaft 606 at which the plural plates 601 are mechanically fixed.

The plates 601 are circular planar disks which are spaced apart from each other having an axial distance d from each other. During the degassing operation the inside volume 623 of the container or vessel 621 is partially filled with moulding material 611 to reach a surface level 616 such that the plates 601 are immersed within the moulding material 611 in a region 629. Thereby, the region 629 is a radially outer region of the disks 601 which covers an area corresponding to less than the radius r0 of the plates. The region 629 may for example have a radial extent which is about or between 80% and 90% of the radius t0 of the plates 601.

As is illustrated in Fig. 6 in the axial view of the degassing arrangement 600, the moulding material 611 is supplied into the inside volume 623 of the container 621 via a supply tube 613 filling the container 621 to the surface level 616. Thereby, the region 629 of the plates 601 is immersed in the moulding material 601 and the moulding material 611 adheres to the surface or (upper and lower) surfaces 603, 604 of the circular disks 601 and then forms a thin film 612 on the surface 603 of each of the plates 601.

Upon rotation of the stack of plates 601 in the rotation direction 607 the thin film 612 is conveyed around the rotation axis 605 and reaches a divider or scraper (such as the scraper 119 illustrated in Fig. 1) which is labelled with reference sign 619. Thereby, the degassed moulding material 622 is collected which fills the container 621 to a level 618. The degassed moulding material 622 is then discharged from the container 621 via an outlet 629.

The divider or scraper 619 illustrated in Fig. 6 may be configured as a serrated rubber plate, i.e. a plate with multiple slots for the multiple disks. This rubber plate may then act as a scraper preventing the degassed resin to flow into the fresh resin pool 611. Thereby, the undegassed resin pool 611 may be effectively separated from the degassed resin pool 622.

A heating system 625 is adapted to heat the moulding material 611 on the surfaces 603, 604 of the plates 601.

The moulding material may be a resin and may be fed into a vacuum chamber and spread as a thin film on a hot disk which slowly rotates. Multiple disks may be placed over each other and the disks may be heated to an elevated temperature in order to lower the viscosity of the resin and the surface tension of the resin. After a certain time of resting on the undisturbed plate, the film is removed from the disk.

The rotating disk may receive the material from a stationary hollow tube with outlets holes or a narrow slot. Behind the stationary tube a rubber spatula may remove the degassed resin from the disks. The resin may also be removed by means of a centrifugal force generate by rotation the disks at high speed.

Generally, it may be advantageous to provide a stationary moulding material in order to improve bursting of bubbles and degassing. Further, degassing may be improved by effecting a laminar flow of the moulding material to be degassed. In particular, a low friction surface of the disks may be advantageous which may be achieved by applying a suitable coating. For removing the degassed moulding material from the disks the degassed moulding material may flow towards the rim (radially outer edge) of the disks. The moulding material may be supplied to the disks and will be removed after degassing from the disks after having performed less than a full revolution.

In particular, all embodiments of the present invention may take advantage of both surfaces of the disks such that on both surfaces of the disks the moulding material forms a thin film for increasing the surface area.

## Claims

1. Arrangement (100, 200, 300, 400, 500, 600) for degassing a moulding material (111, 211, 311, 411, 511, 611), the arrangement comprising:
a container (521, 621);
a stack of a plurality of plates (101, 201, 301, 401, 501, 601) within the container (521, 621), the plates being rotatable relative to the container (521, 621) around a vertically oriented rotation axis (305, 505) and being arranged on top of each other and spaced apart (d) from each other; and
a supply system (109) for supplying the moulding material onto surfaces (103, 203, 303, 403, 503, 504, 603, 604) of the plates (101, 201, 301, 401, 501, 601) for degassing,
**characterized in that**
the supply system comprises:
a supply conduct (313) within a rotation shaft (306) at which the plates (301) are connected, the rotation shaft (306) having an outlet (315) at the center of a plate (301) of the plurality of plates (301) for supplying the moulding material,
wherein the arrangement is adapted to allow a rotation velocity such as to result in escape of the moulding material from the surfaced due to a centrifugal force (208, 308),
wherein during degasing the moulding material exits the supply conduct and covers respective surfaces of the plates as a film which moves due to the centrifugal force.

2. Arrangement according to claim 1, wherein the plates (101, 201, 301, 401, 501, 601) are planar, in particular circular, wherein a number of plates is in particular between 5 and 100, further in particular between 10 and 40.

3. Arrangement according to claim 1 or 2, wherein the plates (101, 201, 301, 401, 501, 601) are synchronously rotatable.

4. Arrangement according to one of the preceding claims, wherein the stack of plates (101, 201, 301, 401, 501, 601) occupies between 70 % and 99 % of an inside volume of the container (521, 621).

5. Arrangement according to one of the preceding claims, wherein each plate (101, 201, 301, 401, 501, 601) has an upper surface (103, 203, 303, 403, 503, 504, 604, 603) and a lower surface (504, 604), onto both of which the moulding material (511, 611) is supplied for degassing.

6. Arrangement according to one of the preceding claims, wherein the container comprises a release region (618, 629) in which degassed moulding material (622) is released from surfaces (603, 604) of the plates (601) upon rotation of the plates.

7. Arrangement according to one of the preceding claims, wherein the supply system comprises:
a supply tube (113) with outlets (115) at different radial positions; and/or
a supply tube (213) with an outlet (215) at a radially inner position of the rotating plates (201); and/or
a spray supply system (413) providing exit nozzles (415) at different radial positions.

8. Arrangement according to one of the preceding claims, further comprising:
a heating system (624) for tempering the material on the surfaces of the plates,
wherein the heating system is adapted to heat the material on the surfaces of the plates to a temperature between 20°C and 80°C, in particular between 30°C and 60°C.

9. Arrangement according to one of the preceding claims, wherein the moulding material comprises a thermosetting material, in particular a polymer resin, in particular free of a cross-linker.

10. Arrangement according to one of the preceding claims,
wherein a vacuum between 2 mbar and 100 mbar, in particular 5 mbar and 50 mbar, is achievable within the container during degassing.

11. Method for degassing a moulding material, the method comprising:
feeding the moulding material (111, 211, 311, 411, 511, 611) into a container (521, 621);
rotating, around a vertically oriented rotation axis (305, 505), a plurality of plates (101, 201, 301, 401, 501, 601) within the container relative to the container, the plates being arranged on top of each other and spaced apart (d) from each other for forming a stack; and
supplying the moulding material (111, 211, 311, 411, 511, 611) onto surfaces (103, 203, 303, 403, 503, 504, 603, 604) of the rotating plates for degassing,
**characterized in that**
the moulding material is supplied via a supply conduct (313) within a rotatation shaft (306) at which the plates are connected, the rotation shaft (306) having an outlet (315) at the center of a plate (301) of the plurality of plates (301) for supplying the moulding material,
wherein a rotation velocity is such as to result in escape of the moulding material from the surfaces due to a centrifugal force (208, 308),
wherein during degasing the moulding material exits the supply conduct and covers respective surfaces of the plates as a film which moves due to the centrifugal force.

## Patentansprüche

1. Anordnung (100, 200, 300, 400, 500, 600) zum Entgasen einer Formmasse (111, 211, 311, 411, 511, 611), wobei die Anordnung Folgendes umfasst:
einen Behälter (521, 621);
einen Stapel aus mehreren Platten (101, 201, 301, 401, 501, 601) innerhalb des Behälters (521, 621), wobei die Platten relativ zu dem Behälter (521, 621) um eine vertikal ausgerichtete Drehachse (305, 505) drehbar sowie übereinander angeordnet und voneinander beabstandet (d) sind; und
ein Zufuhrsystem (109) für das Zuführen der Formmasse auf Flächen (103, 203, 303, 403, 503, 504, 603, 604) der Platten (101, 201, 301, 401, 501, 601) zum Entgasen,
**dadurch gekennzeichnet, dass** das Zufuhrsystem Folgendes umfasst:
eine Zufuhrleitung (313) innerhalb einer Drehwelle (306), an der die Platten (301) befestigt sind, wobei die Drehwelle (306) einen Auslass (315) in der Mitte einer Platte (301) der Vielzahl von Platten (301) für die Zufuhr der Formmasse hat, wobei die Anordnung dazu angepasst ist, eine Rotationsgeschwindigkeit zu erlauben, die zum Entweichen der Formmasse von den Flächen aufgrund einer Zentrifugalkraft (208, 308) führt,
wobei während des Entgasens die Formmasse die Zufuhrleitung verlässt und jeweils Flächen der Platten wie eine Folie bedeckt, die sich aufgrund der Zentrifugalkraft bewegt.

2. Anordnung nach Anspruch 1, wobei die Platten (101, 201, 301, 401, 501, 601) ebenflächig, insbesondere kreisförmig sind, wobei die Anzahl der Platten insbesondere zwischen 5 und 100, ferner insbesondere zwischen 10 und 40 liegt.

3. Anordnung nach Anspruch 1 oder 2, wobei die Platten (101, 201, 301, 401, 501, 601) synchron drehbar sind.

4. Anordnung nach einem der vorhergehenden Ansprüche, wobei der Stapel der Platten (101, 201, 301, 401, 501, 601) zwischen 70 % und 99 % eines Innenvolumens des Behälters (521, 621) einnimmt.

5. Anordnung nach einem der vorhergehenden Ansprüche, wobei jede Platte (101, 201, 301, 401, 501, 601) eine obere Fläche (103, 203, 303, 403, 503, 504, 604, 603) und eine untere Fläche (504, 604) hat, auf die jeweils die Formmasse (511, 611) zum Entgasen zugeführt wird.

6. Anordnung nach einem der vorhergehenden Ansprüche, wobei der Behälter einen Freigabebereich (618, 629) umfasst, in dem entgaste Formmasse (622) von den Flächen (603, 604) der Platten (601) bei Drehung der Platten freigegeben wird.

7. Anordnung nach einem der vorhergehenden Ansprüche, wobei das Zufuhrsystem Folgendes umfasst:
ein Zufuhrrohr (113) mit Auslässen (115) an radial unterschiedlichen Stellen und/oder
ein Zufuhrrohr (213) mit einem Auslass (215) an einer radial inneren Stelle der sich drehenden Platten (201) und/oder
ein Sprühzufuhrsystem (413), das Austrittsdüsen (415) an radial unterschiedlichen Stellen bereitstellt.

8. Anordnung nach einem der vorhergehenden Ansprüche, ferner umfassend:
ein Heizsystem (624) zum Temperieren der Masse auf den Flächen der Platten,
wobei das Heizsystem geeignet ist, die Masse auf den Flächen der Platten auf eine Temperatur zwischen 20 °C und 80 °C, insbesondere zwischen 30 °C und 60 °C zu erhitzen.

9. Anordnung nach einem der vorhergehenden Ansprüche, wobei die Formmasse ein thermoplastisches Material enthält, insbesondere ein Polymerharz, insbesondere frei von einem Vernetzer.

10. Anordnung nach einem der vorhergehenden Ansprüche, wobei während der Entgasung innerhalb des Behälters ein Vakuum zwischen 2 mbar und 100 mbar, insbesondere zwischen 5 mbar und 50 mbar, erreichbar ist.

11. Verfahren zum Entgasen einer Formmasse, wobei das Verfahren Folgendes umfasst:
Zuführen der Formmasse (111, 211, 311, 411, 511, 611) in einen Behälter (521, 621),
Drehen, um eine vertikal ausgerichtete Drehachse (305, 505), einer Vielzahl von Platten (101, 201, 301, 401, 501, 601) innerhalb des Behälters relativ zu dem Behälter, wobei die Platten übereinander angeordnet und voneinander beabstandet (d) sind zum Bilden eines Stapels; und
Zuführen der Formmasse (111, 211, 311, 411, 511, 611) auf Flächen (103, 203, 303, 403, 503, 504, 603, 604) der rotierenden Platten zum Entgasen,
**dadurch gekennzeichnet, dass**
die Formmasse zugeführt wird durch eine Zufuhrleitung (313) innerhalb einer Drehwelle (306), an der die Platten befestigt sind, wobei die Drehwelle (306) einen Auslass (315) in der Mitte einer Platte (301) der Vielzahl von Platten (301) für die Zufuhr der Formmasse hat, wobei eine Rotationsgeschwindigkeit derart ist, dass sie zum Entweichen der Formmasse von den Flächen aufgrund einer Zentrifugalkraft (208, 308) führt,
wobei während des Entgasens die Formmasse die Zufuhrleitung verlässt und jeweils Flächen der Platten wie eine Folie bedeckt, die sich aufgrund der Zentrifugalkraft bewegt.

## Revendications

1. Agencement (100, 200, 300, 400, 500, 600) de dégazage d'un matériau de moulage (111, 211, 311, 411, 511, 611), l'agencement comprenant :
un contenant (521, 621) ;
une pile d'une pluralité de plaques (101, 201, 301, 401, 501, 601) à l'intérieur du contenant (521, 621), les plaques étant rotatives par rapport au contenant (521, 621) autour d'un axe (305, 505) de rotation orienté verticalement, et étant disposées les unes au-dessus des autres et espacées (d) les unes des autres ; et
un système d'approvisionnement (109) permettant d'approvisionner le matériau de moulage sur des surfaces (103, 203, 303, 403, 503, 504, 603, 604) des plaques (101, 201, 301, 401, 501, 601) pour un dégazage,
**caractérisé en ce que**
le système d'approvisionnement comprend :
une conduite d'approvisionnement (313) à l'intérieur de l'axe de rotation (306) au niveau duquel les plaques (301) sont connectées, l'axe de rotation (306) ayant une sortie (315) au niveau du centre d'une plaque (301) de la pluralité de plaques (301) permettant d'approvisionner le matériau de moulage,
dans lequel l'agencement est adapté pour permettre une vitesse de rotation de manière à entraîner l'échappement du matériau de moulage depuis les surfaces en raison d'une force centrifuge (208, 308),
dans lequel, pendant le dégazage, le matériau de moulage sort de la conduite d'approvisionnement et couvre des surfaces respectives des plaques comme un film qui se déplace en raison de la force centrifuge.

2. Agencement selon la revendication 1, dans lequel les plaques (101, 201, 301, 401, 501, 601) sont planes, en particulier circulaires, dans lequel un nombre de plaques se situe en particulier entre 5 et 100, plus particulièrement entre 10 et 40.

3. Agencement selon la revendication 1 ou 2, dans lequel les plaques (101, 201, 301, 401, 501, 601) sont rotatives de manière synchrone.

4. Agencement selon l'une des revendications précédentes, dans lequel la pile des plaques (101, 201, 301, 401, 501, 601) occupe entre 70 % et 99 % d'un volume intérieur du contenant (521, 621).

5. Agencement selon l'une des revendications précédentes, dans lequel chaque plaque (101, 201, 301, 401, 501, 601) présente une surface supérieure (103, 203, 303, 403, 503, 504, 604, 603) et une surface inférieure (504, 604), sur lesquelles le matériau de moulage (511, 611) est fourni pour un dégazage.

6. Agencement selon l'une des revendications précédentes, dans lequel le contenant comprend une région de libération (618, 629) dans laquelle le matériau de moulage dégazé (622) est libéré des surfaces (603, 604) des plaques (601) lors de la rotation des plaques.

7. Agencement selon l'une des revendications précédentes, dans lequel le système d'approvisionnement comprend :
un tube d'approvisionnement (113) doté de sorties (115) au niveau de différentes positions radiales ; et/ou
un tube d'approvisionnement (213) doté d'une sortie (215) au niveau d'une position intérieure de manière radiale des plaques rotatives (201) ; et/ou
un système d'approvisionnement de spray (413) fournissant des buses (415) de sortie au niveau de différentes positions radiales.

8. Agencement selon l'une des revendications précédentes, comprenant en outre :
un système de chauffage (624) permettant de tempérer le matériau sur les surfaces des plaques,
dans lequel le système de chauffage est adapté pour chauffer le matériau sur les surfaces des plaques à une température comprise entre 20°C et 80°C, en particulier entre 30°C et 60°C.

9. Agencement selon l'une des revendications précédentes, dans lequel le matériau de moulage comprend un matériau thermodurcissable, particulièrement une résine polymère, en particulier exempte d'un agent de réticulation.

10. Agencement selon l'une des revendications précédentes, dans lequel un vide entre 2 mbar et 100 mbar, en particulier entre 5 mbar et 50 mbar, peut être atteint à l'intérieur du contenant pendant le dégazage.

11. Procédé de dégazage d'un matériau de moulage, le procédé comprenant :
l'introduction du matériau de moulage (111, 211, 311, 411, 511, 611) dans un contenant (521, 621) ;
la rotation, autour d'un axe de rotation orienté verticalement (305, 505), d'une pluralité de plaques (101, 201, 301, 401, 501, 601) à l'intérieur du contenant par rapport au contenant, les plaques étant agencées les unes au-dessus des autres et espacées (d) les unes des autres pour former une pile ; et
l'approvisionnement du matériau de moulage (111, 211, 311, 411, 511, 611) sur des surfaces (103, 203, 303, 403, 503, 504, 603, 604) des plaques de rotation pour un dégazage,
**caractérisé en ce que**
le matériau de moulage est approvisionné par l'intermédiaire d'une conduite d'approvisionnement (313) à l'intérieur d'un axe de rotation (306) au niveau duquel les plaques sont connectées, l'axe de rotation (306) ayant une sortie (315) au centre d'une plaque (301) de la pluralité de plaques (301) pour approvisionner le matériau de moulage,
dans lequel une vitesse de rotation est telle qu'elle entraîne l'échappement du matériau de moulage depuis les surfaces en raison de la force centrifuge (208, 308),
dans lequel, pendant le dégazage, le matériau de moulage sort de la conduite d'approvisionnement et couvre des surfaces respectives des plaques comme un film qui se déplace en raison de la force centrifuge.
